# EUROPÄISCHE PATENTANMELDUNG

(11) **EP 1 748 205 A1**
(43) Veröffentlichungstag der Anmeldung: **31.01.2007**
(21) Anmeldenummer: 06018935.4
(22) Anmeldetag: 08.07.2003
(51) Int. Cl.: F16D 3/84, F16J 3/04, F16J 15/52

(54) **Achsmanschette**

(30) Priorität: 26.07.2002 DE 10234284; 21.08.2002 DE 10239169
(62) Teilanmeldung aus: 03015347.2
(71) Anmelder: Carl Freudenberg KG, 69469 Weinheim (DE)
(72) Erfinder: Dr. Wolf, Joachim, 69469 Weinheim (DE); Dr. Kammann, Andreas, 69123 Heidelberg (DE)

(57) **Zusammenfassung**

Eine Achsmanschette (3) zur Gelenkabdichtung, insbesondere am Antriebsstrang von Kraftfahrzeugen weist einen im wesentlichen rotationssymmetrischen Faltenbalg (4) auf, der mit einem Anschlussbund (5) einstückig ausgeführt ist. Der Anschlussbund (5) weist mehrere, nach innen vorspringende Einbuchtungen (5a) auf, die an radiale Vertiefungen (2) der Außenkontur des Gelenkgehäuses (1) angepasst sind. An der Außenseite des Anschlussbundes (5) sind Ausgleichsstücke (6) angesetzt, die die Außenkontur zu einer zylindrischen Umfangsfläche ergänzen. Die Ausgleichsstücke sind mit einer Klemmschelle (7) als integrales Mehrkomponentenbauteil ausgeführt.

## Beschreibung

Die Erfindung betrifft eine Achsmanschette zur Gelenkabdichtung, insbesondere am Antriebsstrang von Kraftfahrzeugen, mit einem im wesentlichen rotationssymmetrischen Faltenbalg, der mit einem Anschlussbund einstückig ausgeführt ist, und mit am Anschlussbund verteilt angesetzten Ausgleichsstücken zur Anpassung an eine, mehrere radiale Vertiefungen aufweisende Außenkontur eines Gelenkgehäuses, wobei der Anschlussbund mehrere nach innen vorspringende Einbuchtungen aufweist, die an die radialen Vertiefungen der Außenkontur des Gelenkgehäuses angepasst sind, und die Ausgleichsstücke an der Außenseite des Anschlussbundes angesetzt sind und dessen Außenkontur zu einer zylindrischen Umfangsfläche ergänzen, wobei die Ausgleichsstücke mit einer umlaufenden Klemmschelle für den Anschlussbund verbunden sind.

Derartige Achsmanschetten dienen dazu, Gelenke im Antriebsstrang von Kraftfahrzeugen abzudichten, deren Gelenkgehäuse eine Außenkontur mit mehreren radialen Vertiefungen aufweist. Da üblicherweise drei radiale Vertiefungen am Umfang vorgesehen sind, ergibt sich eine dreilappige, auch als trilobe-förmig bezeichnete Außenkontur, die gleichzeitig die Schnittstelle zu der üblicherweise durch Klemmen befestigten Achsmanschette darstellt. Die Abdichtung des Gelenkbereichs ist erforderlich, um Schmutz und Feuchtigkeit vom Gelenk fernzuhalten und die Fettfüllung im Gelenk zu erhalten.

Zur Anpassung des Anschlussbundes des Faltenbalgs an die nicht-rotationssymmetrische Außenkontur des Gelenkgehäuses ist es bekannt, bei aus Elastomeren im Spritzgießverfahren hergestellten Achsmanschetten Verdickungen des Anschlussbunds vorzusehen, die als Ausgleichsstücke die Radiusdifferenzen der Außenkontur des Gelenkgehäuses ausgleichen, so dass zur Klemmung eine kreisförmige Klemmschelle verwendet werden kann.

Am Übergang vom Anschlussbund zum Faltenbalg entstehen hierbei an der Innenseite starke Hinterschneidungen. Der verwendete Elastomer-Werkstoff ermöglicht trotz dieser starken Hinterschneidungen eine einfache Entformung, da er ausreichend reversibel dehnbar ist. Dieses Herstellungsverfahren ist jedoch nicht mehr möglich, wenn die Achsmanschette aus einem thermoplastischen Copolyester (TPE) hergestellt werden soll. Dann würde ein Formteil mit so starken Hinterschneidungen bei der Entformung zerstört werden, da es die erforderlichen Dehnungen nicht erträgt. Außerdem bedingt die Ausbildung starker Wanddickenunterschiede bei thermoplastischen Formteilen lange Abkühlzeiten im Werkzeug und führt zu Einfallstellen oder Lunkerbildung am Formteil.

Um diese Schwierigkeiten zu vermeiden, wird bei einer bekannten Achsmanschette (EP 0 924 450 A2) der Anschlussbund zylindrisch ausgeführt. Zur Anpassung an die mit radialen Vertiefungen versehene Außenkontur des Gelenkgehäuses ist ein vom Anschlussbund umgebenes ringförmiges Einlegeteil vorgesehen, das mehrere nach innen ragende Vorsprünge aufweist, die in die radialen Vertiefungen des Gelenkgehäuses passen. Die Achsmanschette kann zwar verhältnismäßig einfach hergestellt werden, weil insbesondere der Anschlussbund eine gleichbleibende wanddicke hat und keine Hinterschneidungen bilden, die beim Ausformen stören würden. Nachteilig ist jedoch, dass der Faltenbalg oder zumindest sein Anschlussbund in einem zweiten Fertigungsschritt erneut erwärmt werden muss, um die Verbindung mit dem Einlegeteil herzustellen. Dadurch werden die Festigkeit und die Geometrie durch Molekülumlagerungen nachteilig beeinflußt. Außerdem besteht zwischen dem Anschlussbund und dem Einlegeteil eine weitere Fuge, die keine Gebrauchsfunktion hat, aber ebenfalls dichtend ausgelegt werden muss.

Eine solche Fuge wird bei einer bekannten Achsmanschette (EP 0 915 264 A2) dadurch vermieden, dass an der Innenseite des Anschlussbundes Ausgleichsstücke einstückig angeformt werden, die in die radialen Vertiefungen des Gelenkgehäuses passen. Die bekannte Achsmanschette ist in einem kombinierten Spritz-Blasverfahren hergestellt, das einen automatisierten Fertigungsablauf ermöglicht. Die Ausgleichsstücke müssen durch radiale Stege ausgesteift werden, um die Klemmkraft zur Verbindung der Achsmanschette mit dem Gelenkgehäuse zu übertragen. Die notwendige Optimierung der Wanddickenverteilung macht etwaige Änderungen der Ausgleichsstücke aufwendig und teuer, weil dafür die Spritzgießform geändert werden muss.

Bei einer bekannten Achsmanschette der eingangs genannten Gattung (EP 0 389 099 A1) werden drei voneinander getrennte Ausgleichsstücke verwendet, deren eines bandförmige Ende eine in Umfangsrichtung vorspringende Zunge und deren anderes bandförmige Ende einen hierzu komplementären Einschnitt aufweist. Jeweils benachbarte Zungen und Einschnitte greifen ineinander. Die getrennte Ausführung der Ausgleichsstücke erschwert die Montage, weil alle drei Ausgleichsstücke bei der Montage zueinander ausgerichtet und in der Stellung gehalten werden müssen, in der die Zungen in die Einschnitte eingreifen. In dieser Stellung muss die als gesondertes Bauteil bereitzustellende Klemmschelle angelegt und festgezogen werden, wobei sichergestellt sein muss, dass sich die Ausgleichsstücke dabei nicht verschieben. Die Montage ist daher aufwändig.

Aufgabe der Erfindung ist es daher, eine Achsmanschette der eingangs genannten Gattung so auszubilden, dass die Montage wesentlich vereinfacht wird und insbesondere sichergestellt ist, dass die Ausgleichsstücke störungsfrei am Anschlussbund zur Anlage kommen.

Diese Aufgabe wird erfindungsgemäß dadurch gelöst, dass die Ausgleichsstücke mit der Klemmschelle als integriertes Mehrkomponentenbauteil ausgeführt sind.

Dadurch wird die Montage wesentlich vereinfacht, weil alle Ausgleichsstücke und die Klemmschelle nur noch ein einziges, integriertes Bauteil bilden, so dass bei der Montage nicht nur die Handhabung erleichtert und der Arbeitsaufwand verringert wird, sondern auch sichergestellt ist, dass sich die Ausgleichsstücke in der vorgegebenen Lage befinden.

Gemäß einer bevorzugten Ausführungsform der Erfindung ist vorgesehen, dass die einander in Umfangsrichtung benachbarten Ausgleichsstücke, die vorzugsweise zusammenhängend als ein sich um den gesamten Umfang des Anschlussbundes erstreckendes einstückiges Bauteil ausgeführt sind, durch Ringabschnitte verbunden sind und dass zumindest einer der Ringabschnitte in Umfangsrichtung elastisch nachgiebig ausgebildet ist.

Damit wird erreicht, dass die Ausgleichsstücke zusammen mit der Klemmschelle einen geschlossenen Ring bilden und deshalb bei der Montage nicht einzeln in ihrer Lage gehalten werden müssen. Der aus den Ausgleichsstücken und den Ringabschnitten gebildete Ring kann positive und negative Umfangsänderungen, wie sie bei der Montage auftreten, bruchfrei und mit geringer erforderlicher Formänderungskraft ausgleichen.

Der in Umfangsrichtung elastisch nachgiebig ausgeführte Ringabschnitt ist gemäß einer bevorzugten Ausführungsform der Erfindung mäanderförmig ausgebildet. Damit wird in konstruktiv und herstellungstechnisch besonders einfacher Weise eine verhältnismäßig große Nachgiebigkeit in Umfangsrichtung bei geringer Dicke erreicht.

Weitere vorteilhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind. Es zeigt:
Fig. 1 in räumlicher Darstellungsweise ein Gelenkgehäuse mit einer daran angebrachten Achsmanschette,

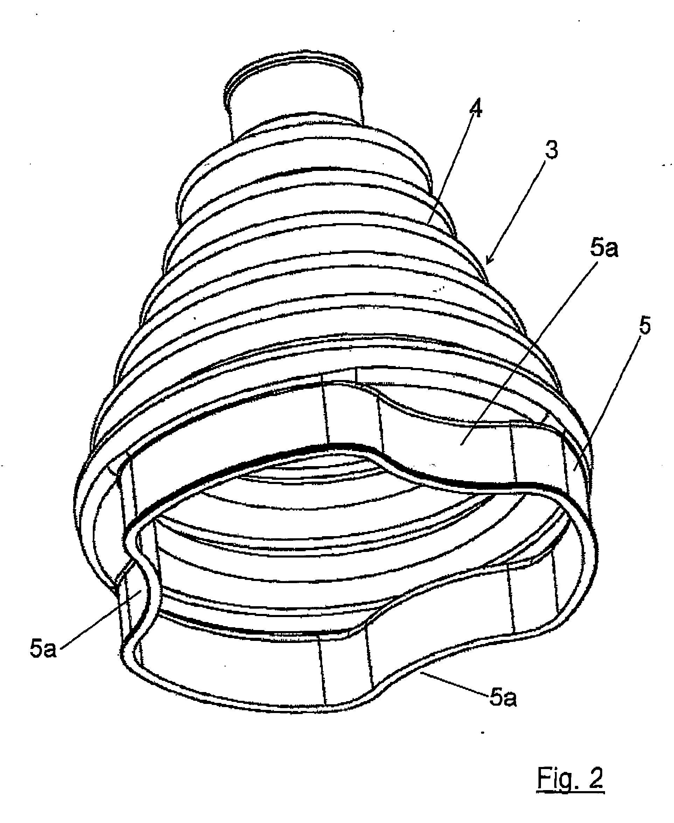

Fig. 2 die Achsmanschette nach Fig. 1 in räumlicher Darstellung,
Fig. 3 die Achsmanschette nach Fig. 2 mit ringförmig miteinander verbundenen Ausgleichsstücken,

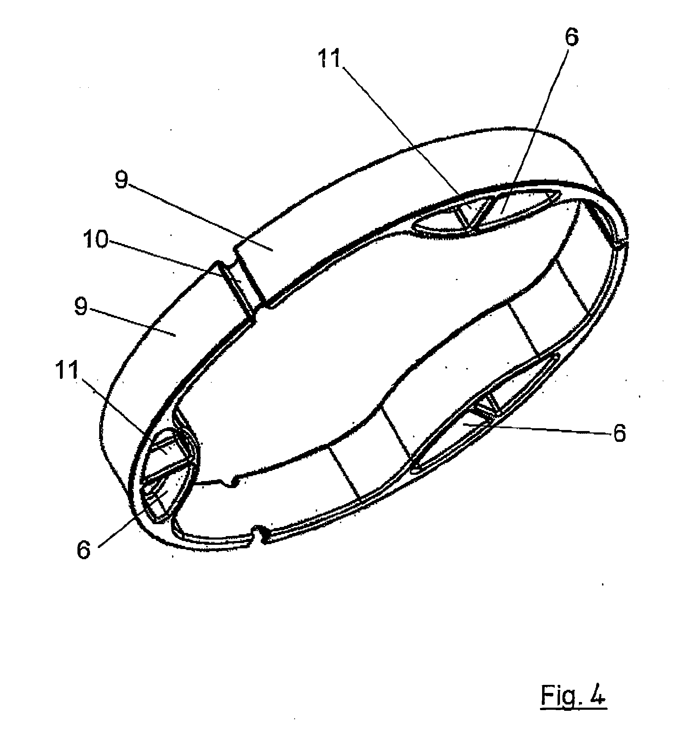

Fig. 4 die ringförmig miteinander verbundenen Ausgleichsstücke gemäß Fig. 3 und
Fig. 5 die ringförmig miteinander verbundenen Ausgleichsstücke, wobei die die Ausgleichsstücke verbindenden Ringabschnitte mäanderförmig ausgebildet sind.

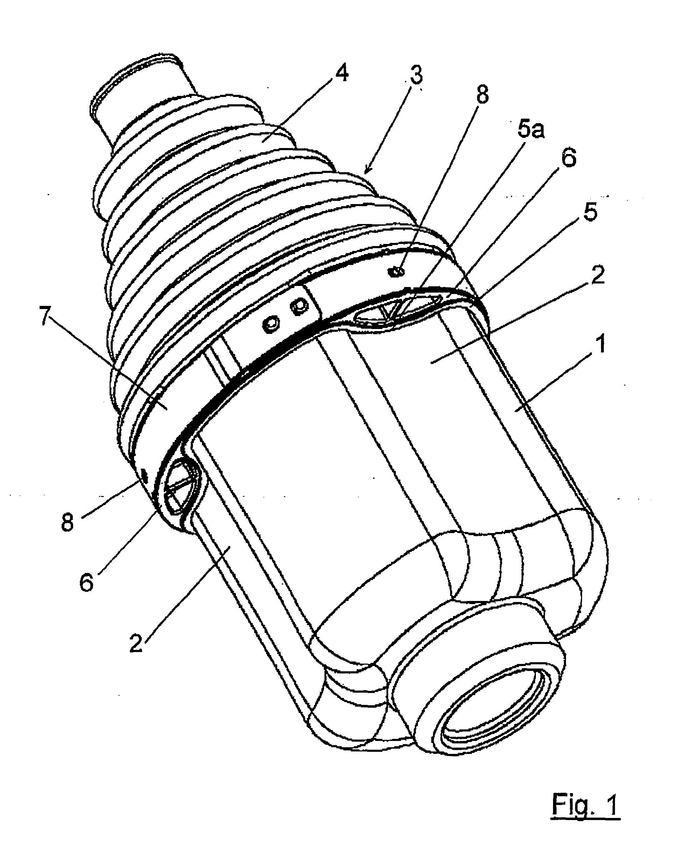

In Fig. 1 ist ein aus Metall bestehendes Gelenkgehäuse 1 eines Gelenks im Antriebsstrang eines Kraftfahrzeugs dargestellt. Die Außenkontur des Gelenkgehäuses 1 weist mehrere, beim dargestellten Ausführungsbeispiel drei radiale Vertiefungen 2 auf. Eine aus einem thermoplastischen Copolyester (TPE) bestehende Achsmanschette 3 weist einen rotationssymmetrischen Faltenbalg 4 auf und dient zur Abdichtung des Gelenks im Antriebsstrang des Kraftfahrzeugs.

Ein Anschlussbund 5 der Achsmanschette 3 ist einstückig mit dem Faltenbalg 4 ausgeführt. Der Anschlussbund 5 weist mehrere nach innen vorspringende Einbuchtungen 5a auf, die an die radialen Vertiefungen 2 der Außenkontur des Gelenkgehäuses 1 angepaßt sind.

An der Außenseite des Anschlussbundes 5 sind mehrere, beim dargestellten Ausführungsbeispiel drei miteinander verbundene Ausgleichsstücke 6 jeweils an der Außenseite der Einbuchtungen 5a angesetzt. Die Ausgleichsstücke 6 ergänzen die Außenkontur des Anschlussbundes 5 zu einer zylindrischen Umfangsfläche und sind mit einer Klemmschelle 7 als integriertes Mehrkomponentenbauteil ausgeführt, durch das der Anschlussbund 5 dichtend gegen die Außenfläche des Gelenkgehäuses 1 gedrückt wird.

Bei dem in Fig. 1 dargestellten Ausführungsbeispiel sind die Ausgleichsstücke 6 mit der Klemmschelle 7 beispielsweise durch Niete 8 verbunden.

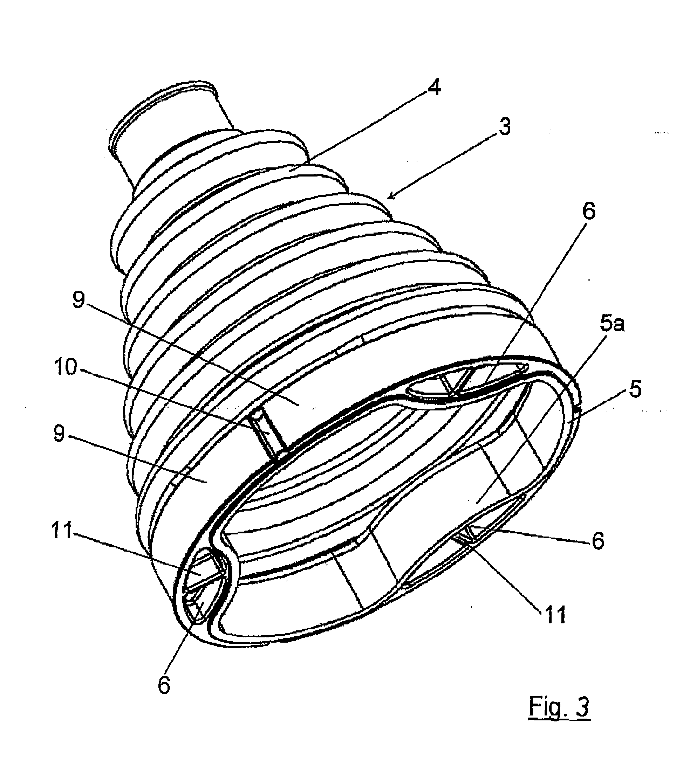

Wie in Fig. 3 gezeigt, sind die Ausgleichsstücke 6 durch Ringabschnitte 9 und Biegegelenke 10 zu einem einstückigen Mehrkomponentenbauteil verbunden, das sich um den gesamten Umfang des Anschlussbundes 5 erstreckt, wobei die Klemmschelle 7 als Teil dieses Mehrkomponentenbauteils in Fig. 3 weggelassen ist.

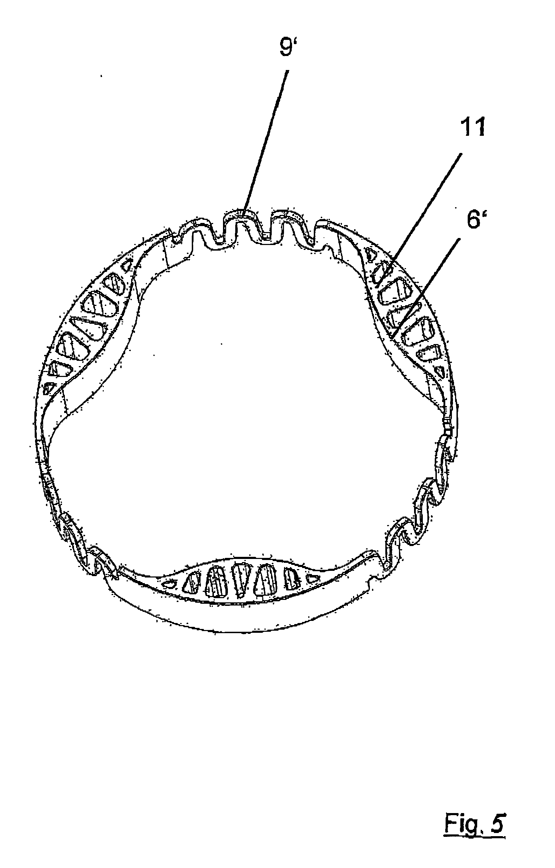

Beim Ausführungsbeispiel gemäß Fig. 5 sind die Ausgleichsstücke 6' durch Ringabschnitte 9', die mäanderförmig ausgeführt sind, zu einem einstückigen Bauteil verbunden, das sich um den gesamten Umfang des Anschlussbundes 5 erstreckt. An dieser Ausführung ist vorteilhaft, dass die einander in Umfangsrichtung benachbarten Ausgleichsstücke 6' durch die Ringabschnitte 9' verbunden sind, die in Umfangsrichtung elastisch nachgiebig ausgebildet sind. Auch hierbei ist die Klemmschelle in der Zeichnung weggelassen.

Der Ring, umfassend die Ausgleichsstücke 6, 6' und die Ringabschnitte 9, 9', kann positive und negative Umfangsänderungen, wie sie bei der Montage auftreten, bruchfrei und mit geringer erforderlicher Formänderungskraft ausgleichen.

Bei allen Ausführungsbeispielen sind die Ausgleichsstücke 6, 6' mit der Klemmschelle 7 als integriertes Mehrkomponentenbauteil ausgeführt.

Bei den dargestellten Ausführungsbeispielen weisen die Ausgleichsstücke 6 jeweils einen radialen Stützsteg 11 auf, der zur Übertragung der Anpreßkraft von der Klemmschelle 7 auf den Anschlussbund 5 dient. Abweichend hiervon können auch mehrere Stützstege die Anpresskraft in einer Fachwerkstruktur übertragen (Fig. 5). Darüber hinaus können die Ausgleichsstücke auch fluidgefüllte Hohlkörper mit flexibler wandung sein.

Es ist auch möglich, die Ausgleichsstücke als Mehrkomponentenbauteile aus unterschiedlich harten Materialkomponenten auszuführen, um eine sehr homogene Druckverteilung zwischen dem Anschlussbund 5 und dem Gelenkgehäuse 1 zu erreichen.

## Patentansprüche

1. Achsmanschette zur Gelenkabdichtung, insbesondere am Antriebsstrang von Kraftfahrzeugen, mit einem im wesentlichen rotationssymmetrischen Faltenbalg, der mit einem Anschlussbund einstückig ausgeführt ist, und mit am Anschlussbund verteilt angesetzten Ausgleichsstücken zur Anpassung an eine, mehrere radiale Vertiefungen aufweisende Außenkontur eines Gelenkgehäuses, wobei der Anschlussbund mehrere, nach innen vorspringende Einbuchtungen aufweist, die an die radialen Vertiefungen der Außenkontur des Gelenkgehäuses angepaßt sind, und die Ausgleichsstücke an der Außenseite des Anschlussbundes angesetzt sind und dessen Außenkontur zu einer zylindrischen Umfangsfläche ergänzen, wobei die Ausgleichsstücke mit einer umlaufenden Klemmschelle für den Anschlussbund verbunden sind, **dadurch gekennzeichnet, dass** die Ausgleichsstücke (6, 6') mit der Klemmschelle (7) als integriertes Mehrkomponentenbauteil ausgeführt sind.

2. Achsmanschette nach Anspruch 1, **dadurch gekennzeichnet, dass** alle Ausgleichsstücke (6, 6') zusammenhängend als ein sich um den gesamten Umfang des Anschlussbundes (5) erstreckendes einstückiges Bauteil ausgeführt sind.

3. Achsmanschette nach Anspruch 1 oder 2, **dadurch gekennzeichnet, dass** die einander in Umfangsrichtung benachbarten Ausgleichsstücke (6, 6') durch Ringabschnitte (9, 9') verbunden sind und dass zumindest einer der Ringabschnitte (9, 9') in Umfangsrichtung elastisch nachgiebig ausgebildet ist.

4. Achsmanschette nach Anspruch 3, **dadurch gekennzeichnet, dass** der Ringabschnitt (9, 9') mäanderförmig ausgebildet ist.

5. Achsmanschette nach einem der Ansprüche 1 bis 4, **dadurch gekennzeichnet, dass** die Ausgleichsstücke (6, 6') als Mehrkomponentenbauteile aus unterschiedlich harten Materialkomponenten ausgeführt sind.

6. Achsmanschette nach einem der Ansprüche 1 bis 5, **dadurch gekennzeichnet, dass** die Ausgleichsstücke (6, 6') als fluidgefüllte Hohlkörper mit flexibler Wandung ausgeführt sind.

7. Achsmanschette nach einem der Ansprüche 1 bis 6, **dadurch gekennzeichnet, dass** der Faltenbalg (4) aus einem thermoplastischen Copolyester (TPE) besteht.
